# EUROPÄISCHE PATENTSCHRIFT

(11) **EP 3 693 818 B1**
(45) Veröffentlichungstag und Bekanntmachung des Hinweises auf die Patenterteilung: **06.08.2025**
(21) Anmeldenummer: 20153857.6
(22) Anmeldetag: 27.01.2020
(51) Int. Cl.: G05B 19/404, G05B 19/18

(54) **VERFAHREN ZUM BEARBEITEN VON ZAHNRAD-WERKSTÜCKEN**
METHOD FOR PROCESSING COG WORKPIECES
PROCÉDÉ D'USINAGE DE PIÈCES À ROUE DENTÉE

(30) Priorität: 05.02.2019 DE 102019102870
(43) Veröffentlichungstag der Anmeldung: 12.08.2020
(73) Patentinhaber: Klingelnberg AG, 8050 Zürich (CH)
(72) Erfinder: Ribbeck, Karl-Martin, 42897 Remscheid (DE)
(74) Vertreter: Janke Scholl Patentanwälte PartG mbB

(56) Entgegenhaltungen:
- EP-A1- 2 570 217
- DE-A1- 102005 058 536
- DE-A1- 102012 012 617
- US-A1- 2015 038 058

## Beschreibung

### Gebiet der Erfindung

Gegenstand der Erfindung ist ein Verfahren zum (Verzahnungs-) Bearbeiten von Zahnrad-Werkstücken.

Es gibt verschiedenste Verfahren zum Verzahnen von Kegelrädern. Fräsverfahren zum Fertigen von Kegelrädern kann man wie folgt charakterisieren:
- Teilverfahren
   ∘ als Einzelteilverfahren (auch intermittierendes Teilverfahren, intermitted indexing process, single indexing process oder face milling genannt) und
   ∘ als kontinuierlich teilendes Verfahren;
- Wälzen
   ∘ als Wälzverfahren und
   ∘ als Tauchverfahren ohne Wälzen. Beispiele für Verfahren zum spanerzeugenden Bearbeiten von Zahnrad-Werkstücken sind in DE 10 2012 012617 A1, DE 10 2005 058536 A1, EP 2 570 217 A1 und US 2015/038058 A1 beschrieben.

Außerdem wird zwischen Completing und Semi-Completing Verfahren unterschieden wobei es um die Anzahl der notwendigen Schnitte geht, die zur Erzeugung der Endgeometrie erforderlich sind. Beim Completing schneidet ein Werkzeug mit einer Maschineneinstellung und beim SemiCompleting schneidet ein Werkzeug mit zwei getrennten Maschineneinstellungen. Beim Semi-Completing wird eine Maschineneinstellung für das Schneiden der konkaven Flanken und die andere Maschineneinstellung für das Schneiden der konvexen Flanke verwendet. Weiterhin gibt es einzelseitig schneidende Verfahren, bei denen ein Werkzeug mit einer Maschineneinstellung die konkave Flanke und ein anderes Werkzeug mit anderen Maschineneinstellungen die konvexe Flanke schneiden.

Diese Attribute der genannten Verfahren sind miteinander kombinierbar und werden auch zum überwiegenden Teil in der Industrie angewendet.

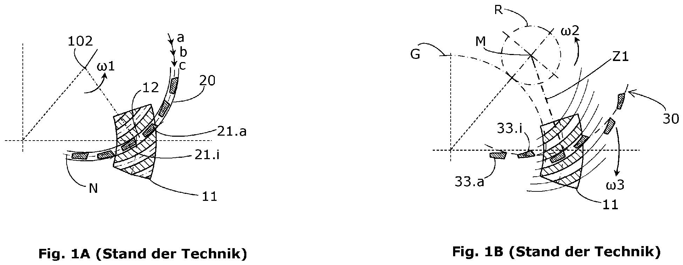

Das Einzelteil-Completing-Verfahren und das kontinuierliche Completing Verfahren werden häufig verwendet. In Fig. 1A sind beispielhafte Grundlagen eines Einzelteilverfahrens gezeigt. Es handelt sich hier, um konkret zu sein, um ein Einzelteil-Completing-Verfahren. Das Einzelteil-Completing-Verfahren ist in Fig. 1A schematisch dargestellt. Hierbei wird vereinfachend die gemeinsame Wälzbewegung von Kegelrad-Werkstück 11 und Messerkopf 20, welche um vieles langsamer erfolgt als die Drehung ω1 des Messerkopfs 20, nicht dargestellt. Es handelt sich bei der Darstellung quasi um eine Momentaufnahme des Wälzprozesses. Die Aussenschneiden 21.a und die Innenschneiden 21.i des Messerkopfes 20 vollziehen eine kontinuierliche kreisbogenförmige Bewegung. Die Drehbewegung des Messerkopfs 20 (hier im Gegenuhrzeigersinn) ist durch einen mit ω1 bezeichneten Pfeil angedeutet. Der Drehpunkt der Werkzeugspindel, respektive der Schnittpunkt mit der Zeichenebene, ist durch das Bezugszeichen 102 gekennzeichnet. Zum Fertigen weiterer Zahnlücken wird der Messerkopf 20 zurückgezogen und das Kegelrad-Werkstück 11 um einen Teilungswinkel gedreht (Teilungsdrehung genannt). Das schrittweise Weiterdrehen (hier im Uhrzeigersinn) ist in Fig. 1A durch die Pfeile a, b und c angedeutet. Es wird somit immer eine Zahnlücke auf einmal gefertigt.

Erweitert-epizykloidisch (auch verlängert-epizykloidisch genannt) verzahnte Kegelräder werden durch ein kontinuierliches Teilverfahren (auch kontinuierliches Wälzfräsen, continuous indexing process, oder face hobbing genannt) gefertigt. Ein entsprechendes Beispiel ist in Fig. 1B schematisch dargestellt. Als Werkzeug kommt hier ein Stabmesserkopf 30 zum Einsatz.

Bei der Erzeugung der Epizykloide im kontinuierlichen Teilverfahren (siehe Fig. 1B) entspricht das Verhältnis von Zähnezahl zu Gangzahl des Stabmesserkopfes 30 (Anzahl der Messergruppen) dem Verhältnis vom Radius des Grundkreises G und dem Radius des Rollkreises R. Man spricht von einer verlängerten Epizykloide, wenn der Messerkopfnennradius, auf dem die Schneiden der Stabmesser sitzen, größer als der Radius des Rollkreises R ist. Bei diesem kontinuierlichen Teilverfahren drehen sich sowohl der Messerkopf 30 als auch das Werkstück 11 in einem zeitlich aufeinander abgestimmten Bewegungsablauf. Die Teilung erfolgt also kontinuierlich und alle Zahnlücken werden quasi gleichzeitig erzeugt. Die Drehbewegung des Messerkopfs 30 ist hier durch ω2 symbolisiert, während die Drehbewegung des Werkstücks 11 durch ω3 symbolisiert ist. Diese setzt sich aus der erforderlichen Teilbewegung und der Wälzbewegung zusammen. Fig. 1B zeigt quasi eine Momentaufnahme des Wälzprozesses. In Fig. 1B ist zu erkennen, dass die Stabmesser 33.a, 33.i des Stabmesserkopfes 30 typischerweise paarweise (gruppenweise, mit zwei Messern pro Gruppe) angeordnet sind. Die Anordnung der Stabmesser 33.a, 33.i ist nicht konzentrisch entlang eines Nennkreises N, wie beim Stabmesserkopf 20 der Fig. 1A. In Fig. 1B ist zu erkennen, dass der Rollkreis R des Messerkopfes 30 entlang des Grundkreises G des Werkstücks 11 abrollt. M bezeichnet hier den Mittelpunkt des Messerkopfes 30 und Z1 bezeichnet den Flugkreisradius.

Die in den Figuren 1A und 1B gezeigten Verfahren können, wenn sie ohne Wälzung durchgeführt werden, auch als Tauchverfahren für die Herstellung von Tellerrädern eingesetzt werden.

Weiterhin gibt es verschiedene Möglichkeiten von Prozessen, um die genannten Verfahren durchzuführen. Beispielsweise gibt es das Einwälzen, Tauchen-Wälzen, Doppelwälzen und andere. Es können die verschiedensten Varianten durch Kombination von Wälz- und Tauchdurchgängen und der Startund Endwerte, sowie Geschwindigkeitsverläufe genutzt werden.

Es ist anhand der Figuren 1A und 1B unschwer zu erkennen, dass die Kinematik dieser Verfahren zum Teil sehr komplex sein kann, da mehrere Bewegungsabläufe miteinander koordiniert erfolgen.

Man kann den Figuren 1A und 1B auch entnehmen, dass sich - je nach Momentaufnahme - mehrere Messer spanabhebend im Eingriff befinden können. Es kann daher zu dynamischen Lastwechseln kommen.

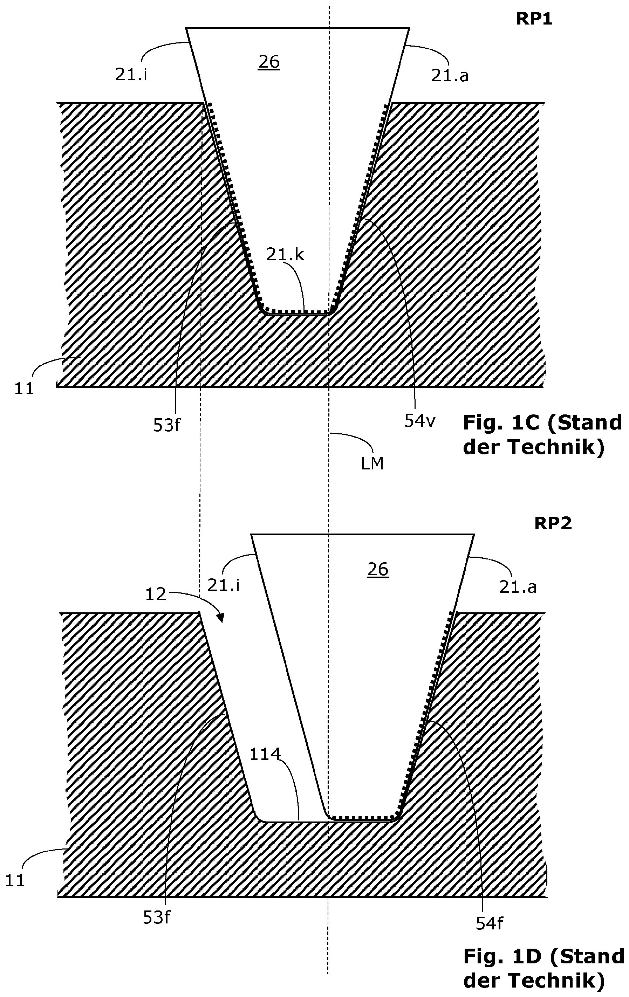

Fig. 1C zeigt eine schematische Schnittdarstellung einer ersten Bearbeitungsphase eines beispielhaften Einzelteil-Semicompleting-Verfahrens, gemäß Stand der Technik. Während dieser ersten Bearbeitungsphase wird eine linke Flanke 53f eines Kegelrad-Werkstücks 11 fertigverzahnt und gleichzeitig wird eine rechte Flanke 54v vorverzahnt. In der ersten Bearbeitungsphase befindet sich der aktive Bereich 26 eines Stabmessers in einer ersten Relativposition RP1. In dem gezeigten Moment werden ein Teil der Aussenschneide 21.a, ein Teil der Innenschneide 21.i und die Kopfschneide 21.k spanabhebend eingesetzt. Diejenigen Abschnitt der Schneiden 21.a, 21.i. 21.k, die spanabhebend eingesetzt werden, sind durch gepunktete Linien hervor gehoben.

Fig. 1D zeigt eine schematische Schnittdarstellung einer zweiten Bearbeitungsphase des beispielhaften Einzelteil-Semicompleting-Verfahrens, gemäß Stand der Technik. Während dieser zweiten Bearbeitungsphase werden die rechte Flanke 54f des Kegelrad-Werkstücks 11 und ein Bereich des Lückengrunds 114 fertigverzahnt. In dem gezeigten Moment werden ein Teil der Aussenschneide 21.a und die Kopfschneide 21.k spanabhebend eingesetzt. Die Innenschneide 21.i kommt nicht zum Einsatz.

Man kann auch anhand der Figuren 1C und 1D erkennen, dass sich - je nach Bearbeitungsphase - unterschiedliche Bereiche der Schneiden spanabhebend im Eingriff befinden können. Auch durch den Wechsel der Bearbeitungsphasen kann es somit zu dynamischen Lastwechseln kommen.

Die schematischen Darstellungen der Figuren 1A bis 1D sind nur ansatzweise dazu geeignet, um die Komplexität der dynamisch wechselnden Lasten darzustellen. In der Praxis sind die Zusammenhänge noch deutlich komplexer. Die dynamisch wechselnden Lasten hängen von zahlreichen Faktoren ab. Unter anderem können die Spandicke, die Anzahl der Schnitte pro Zeiteinheit, die Schnittgeschwindigkeit, die Steifigkeit der Verzahnungsmaschine und des Werkzeugs, die Steifigkeit des Schneidteils der Messer des Verzahnungswerkzeugs, die Form und Orientierung der Schneiden des Schneidteils der Messer des Verzahnungswerkzeugs, sowie die Materialeigenschaften (wie die Zerspanbarkeit eines Werkstoffes) des Zahnrad-Werkstücks eine Rolle spielen, um nur einige der Einflussgrössen zu nennen.

Hinzu kommt die Tatsache, dass Anbieter bestrebt sind die Produktivität der beschriebenen Verfahren zu steigern. Dabei wird unter anderem auf das Erhöhen der Schnittgeschwindigkeit gesetzt. Die Anforderungen an die Materialien der Verzahnungswerkzeuge und an die Werkzeugstandzeit steigen dadurch an. Immer häufiger kommen Messerkopfsysteme zum Einsatz, da diese Systeme mehr Flexibilität bieten.

Messerköpfe sind die am häufigsten verwendete Werkzeugform. Hierbei können als Messer, je nach Messerkopftyp und Verfahren, Stabmesser, Profilmesser oder Messer mit Schneidplatten eingesetzt werden. Beispielsweise werden Stabmesser in sogenannten Messergruppen angeordnet. Eine Messergruppe kann beispielsweise aus drei Messern (Innenschneider, Mittenoder Kopfschneider und Außenschneider), zwei Messern (Innen- und Außenschneider) oder einem Messer (Vollschneider oder Innen- oder Außenschneider) bestehen.

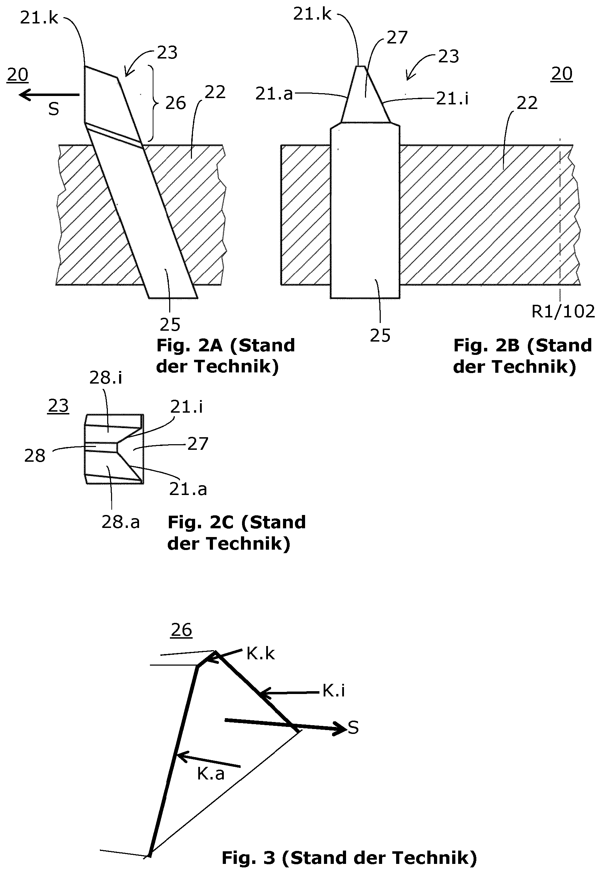

Details des beispielhaften Messerkopfsystems sind den Figuren 2A, 2B und 2C zu entnehmen. Da es sich hier um einen Messerkopf 20 des Standes der Technik handelt, werden hier weiterhin dieselben Bezugszeichen verwendet.

Ein entsprechender Messerkopf 20 kann zum Beispiel mehrere Stabmessergruppen mit mindestens je einem Innenmesser 21.i und einem Aussenmesser 21.a pro Messergruppe tragen, wie bereits in Fig. 1A gezeigt.

Der Messerkopf 20 der Figuren 2A, 2B und 2C kann zum Beispiel mehrere Stabmesser 23 mit je einer Innenschneide 21.i und je einer Aussenschneide 21.a pro Stabmesser 23 tragen, wie in Fig. 2A zu erkennen ist. Anders als in den Figuren 1C und 1D, hat der aktive Bereich 26 des Stabmessers 23 hier eine asymmetrische Form.

Die Aussenschneide 21.a entfernt, je nach Verzahnungsverfahren, z.B. Material von der rechten Flanke 54v einer Zahnlücke 12 (siehe Fig. 1C), um diese rechte Flanke 54v vorzuverzahnen. Gleichzeitig entfernt die Innenschneide 21.i, je nach Verzahnungsverfahren, z.B. Material von der linken Flanke 53f der Zahnlücke 12, um diese linke Flanke 53f fertig zu verzahnen (siehe Fig. 1C).

In einem nachfolgenden Verfahrensschritt kann die Aussenschneide 21.a dann weiteres Material von der rechten Flanke 54v der Zahnlücke 12 entfernen (siehe Fig. 1D), um diese rechte Flanke 54v fertig zu verzahnen. Die fertig verzahnten Flanken sind mit den Bezugszeichen 53f und 54f bezeichnet.

Um Material von den Flanken einer Zahnlücke 12 entfernen zu können, werden durch die Verzahnungsmaschine, in der der Messerkopf 20 zum Einsatz kommt, entsprechende Maschineneinstellungen vorgegeben, wie bereits erwähnt.

Anhand der Figuren 2A - 2C werden im Folgenden weitere Details des beispielhaft gezeigten Messerkopfs 20 erläutert. Es handelt sich hier lediglich um beispielhafte Angaben.

Ein Stabmesser 23 kann einen Schaft 25 umfassen, der in einer Aufnahmeöffnung eines Grundkörpers 22 des Messerkopfs 20 befestig ist. Mit dem Bezugszeichen 27 ist die Spanfläche des Stabmessers 23 bezeichnet. Als Spanfläche 27 wird diejenige Fläche des aktiven Bereichs 26 bezeichnet, über die die Späne bei der Bearbeitung ablaufen. Das Bezugszeichen 28 bezeichnet die Kopffreifläche und die Bezugszeichen 28.a, 28.i bezeichnen die beiden seitlichen Freiflächen. Weiterhin ist eine Kopfschneide 21.k vorgesehen.

Im Prinzip sind die einzelnen Flächen und die Winkel zwischen den Flächen des aktiven Bereichs 26 durch die angenommene Schnittrichtung und die Vorschubrichtung des Verzahnungswerkzeugs definiert. Die grundlegenden Begriffe können beispielsweise der DIN-Norm DIN6581 "Begriffe der Zerspantechnik - Bezugssystem und Winkel am Schneidteil des Werkzeugs", Beuth - Verlag, Berlin, 1985, entnommen werden. Es ist aber auch möglich andere Definitionen und Bezugssysteme zu verwenden.

Genau genommen, ist die 3-dimensionale Geometrie der Schneidkante(n) des aktiven Bereichs 26 primär durch die 3-dimensionale Geometrie der zu fräsenden Zahnlücken des Zahnrad-Werkstücks und durch die Verfahrenskinematik definiert. Der Auslegung/Modifikation der 3-dimensionalen Geometrie der Schneidkante(n) sind daher entsprechende Grenzen gesetzt.

Die NC-Steuerungen moderner Verzahnungsmaschinen sind zum Teil so ausgelegt, dass sie ein Verzahnungswerkzeug, z.B. einen Stabmesserkopf, langsam drehbeschleunigen oder dass beim Eintauchen des Verzahnungswerkzeugs in das Material des Zahnrad-Werkstücks eine vorbestimmtes Beschleunigungsprofil gefahren wird. Auf diese Art und Weise können beispielweise plötzlich auftretende Lastwechsel vermieden oder deren negative Auswirkungen auf Werkzeug und Werkstück reduziert werden. Damit lässt sich die Werkzeugstandzeit zum Teil erhöhen.

Außerdem kommen vermehrt (Software-)Module zum Einsatz, die dazu ausgelegt sind mit der NC-Steuerung einer Verzahnungsmaschine in Wechselwirkung zu stehen. Dabei kann ein solches Modul zum Beispiel die Stromaufnahme eines Achsantriebs (z.B. des Drehantriebs der Werkzeugspindel) überwachen und regeln. Es wird bei diesem Ansatz angenommen, dass die Stromaufnahme proportional mit der Last ansteigt, die auf das Verzahnungswerkzeug einwirkt. Um z.B. Lastspitzen am Verzahnungswerkzeug zu verhindern, kann ein solches Modul temporär die Stromzufuhr des Antriebs drosseln.

Trotz dieser Maßnahmen kann es zu einem deutlichen Werkzeugverschleiss oder gar zu einem vorzeitigen Versagen eines Verzahnungswerkzeugs kommen, oder es können beispielsweise unerwartet Vibrationen während des Verzahnens auftreten.

Es ist daher eine Aufgabe der Erfindung ein Verfahren und eine Vorrichtung bereit zu stellen, um einen vorzeitigen Werkzeugverschleiss oder gar ein Versagen eines Verzahnungswerkzeugs zu verhindern und/oder um Vibrationen zu unterbinden, die einen Einfluss auf die Oberflächenqualität der Verzahnungen haben können.

Es ist auch eine Aufgabe der Erfindung eine Optimierung der Nutzung des Werkzeugs zu ermöglichen, wobei der Begriff "Optimierung" nicht im Sinne einer mathematischen Optimierung, sondern im Sinne einer technischen Optimierung oder Veränderung zu verstehen ist.

Die Erfindung geht von einem Ansatz aus, der es ermöglichen soll die relative Krafteinwirkung auf die Schneiden eines Verzahnungswerkzeugs zu kontrollieren.

Durch diesen Ansatz soll es bei mindestens einem Teil der Ausführungsformen möglich sein zu verhindern, dass an einzelnen Schneiden momentan und/oder lokal zu grosse Kräfte auftreten.

Außerdem soll es bei mindestens einem Teil der Ausführungsformen möglich sein das Werkzeug, respektive die Schneiden des Werkzeugs, möglichst produktiv so zu nutzen, dass an den Schneiden keine Grenzwerte überschritten werden. Durch diesen Ansatz kann das spanerzeugende Bearbeiten möglichst schnell durchgeführt werden, ohne dabei jedoch Grenzwerte zu überschreiten oder Grenzbereiche zu verlassen.

Es geht bei der vorliegenden Erfindung um das spanende Bearbeiten (auch Verzahnungs-Bearbeiten genannt) eines Zahnrad-Werkstücks mit einem Schneidwerkzeug, das mindestens zwei geometrisch bestimmte Schneiden umfasst.

Das Verfahren der Erfindung ist bei allen, oder mindestens bei einem Teil der Ausführungsformen zum spanerzeugenden (Verzahnungs-) Bearbeiten eines Zahnrad-Werkstücks in einer Maschine mit einem Schneidwerkzeug ausgelegt, das mindestens zwei geometrisch bestimmte Schneiden umfasst, wobei die Schneiden im Rahmen des spanerzeugenden Bearbeitens Material in Spanform am Zahnrad-Werkstück erzeugen. Das spanerzeugende Bearbeiten ist durch Verfahrensparameter definiert und das Verfahren der Erfindung umfasst die Schritte:
(1) Durchführen einer computergestützten Analyse des Erzeugens von Spänen an den Schneiden des Schneidwerkzeugs,
(2) Durchführen einer computergestützten Ermittlung von relativen Kräften, die beim Erzeugen von Spänen an den Schneiden des Schneidwerkzeugs auftreten werden,
(3) Optimieren des spanerzeugenden Bearbeitens, um zu verhindern, dass die relativen Kräfte einen vorgegebenen Grenzwert übersteigen oder einen Grenzbereich erreichen, wobei im Rahmen des Optimierens durch eine Anpassung mindestens eines der Verfahrensparameter angepasste Verfahrensparameter bereitgestellt werden, und
(4) Durchführen des spanerzeugenden Bearbeitens (V6) des Zahnrad-Werkstücks (11) mit dem/den angepassten Verfahrensparametern.

Die mindestens zwei geometrisch bestimmten Schneiden können bei allen Ausführungsformen an einem gemeinsamen Messer oder an verschiedenen Messern angeordnet sein.

Das Verfahren der Erfindung unterteilt sich bei allen, oder mindestens bei einem Teil der Ausführungsformen, in vorbereitende Schritte (1) - (3) und in einen Schritt (4), der dem eigentlichen spanerzeugenden Bearbeiten des Zahnrad-Werkstücks dient.

Bei mindestens einem Teil der Ausführungsformen können die Schritte (1) und (2) teilweise überlappend oder gar zeitgleich ausgeführt werden.

Um das spanerzeugende Bearbeiten des Zahnrad-Werkstücks planen zu können und um das spanerzeugende Bearbeiten anschliessend kontrolliert durchführen zu können, kann, je nach Ansatz und Ausführungsform, z.B. die relative Krafteinwirkung als Kraft pro Längeneinheit einer Schneide, als Drehmoment pro Längeneinheit einer Schneide, als Kraft pro Volumeneinheit einer Schneide, als Drehmoment pro Volumeneinheit einer Schneide, oder als relative Krafteinwirkung in Abhängigkeit vom Material des Messers definiert werden.

Um eine Aussage über die relative Krafteinwirkung auf die Schneiden des Verzahnungswerkzeugs machen zu können, werden gemäß Erfindung bei einem Teil oder bei allen Ausführungsformen der Erfindung die Verfahrenskräfte in den vorbereitenden Schritte (1) - (3) analytisch (z.B. anhand von systematischen Untersuchungen und deren Auswertung) ermittelt, die beim spanenden Verzahnen auf die verschiedenen Schneiden des aktiven Bereichs eines Messers des Verzahnungswerkzeugs einwirken.

Es geht somit bei allen Ausführungsformen um eine relative Größe (z.B. eine Kraft oder ein Drehmoment), die in irgendeiner Form auf eine Schneide des Verzahnungswerkzeugs bezogen ist.

Bei mindestens einem Teil der Ausführungsformen werden in den vorbereitenden Schritte (1) - (2) für die Spanbildung am Zahnrad-Werkstück die Kräfte ermittelt, die zum Abscheren des Materials des Zahnrad-Werkstücks führen. Dabei kann z.B. ein mechanistisches Modell Anwendung finden, das die Bildung von Scherebenen und/oder Scherzonen abbildet. D.h. in diesem Fall geht man für die Scherebenen und/oder Scherzonen den Weg über eine Modellierung des Umformvorgangs.

Bei mindestens einem Teil der Ausführungsformen werden in den vorbereitenden Schritte (1) - (2) für die Spanbildung am Zahnrad-Werkstück ein linearer Zusammenhang zwischen der Spanungsdicke und der entsprechenden Zerspankraft angenommen, was den Aufwand zum analytischen Ermitteln der Verfahrenskräfte reduzieren hilft.

Bei mindestens einem Teil der Ausführungsformen können in den vorbereitenden Schritte (1) - (2) für die Spanbildung am Zahnrad-Werkstück auch ein Potential-Modell oder ein Exponential-Modell zur Anwendung kommen.

Beim Analysieren und/oder Modellieren des Umformvorgangs oder beim Verwenden eines linearen, potentiellen oder exponentiellen Modells kann man beispielsweise auf existierende Modelle und/oder Daten zurück greifen, oder es können eigene Modelle und/oder Daten zur Anwendung kommen und/oder es können eigene systematische Untersuchungen und deren Auswertungen vorgenommen werden.

Da es bisher für das Modellieren des Umformvorgangs beim Fräsen von Kegelrädern bisher keine allgemein gültigen analytischen Formeln gibt, und da die kinematischen Bedingungen sich während des Kegelradfräsens deutlich ändern können, kann das Fräsen von Kegelrädern gemäß Erfindung bei allen Ausführungsformen zur besseren analytischen Untersuchung und Auswertung in einzelne Verfahrensabschnitte zerlegt werden (hier als Segmentierung bezeichnet). Für jeden dieser Verfahrensabschnitte (hier auch als Segmente bezeichnet) können dann die relativen Schneidkräfte analytisch ermittelt werden, die auf einzelne Schneiden des aktiven Bereichs einwirken, oder die auf kürzere Teilabschnitt der einzelnen Schneiden einwirken.

Falls sich aus dem Verfahren der Erfindung ergibt, dass sich an mindestens einer Stelle mindestens einer der Schneiden des Verzahnungswerkzeugs eine Krafteinwirkung ergeben sollte,
- die über einem Grenzwert liegt,
- die einen Grenzbereich erreicht oder diesen verlässt,
so kann das Verfahren eine oder mehrere der folgenden Reaktionen vorsehen/auslösen:
- Absetzen einer Warnung (optisch und/oder akustisch);
- Erzeugen einer (grafischen) Darstellung auf einem Bildschirm, wobei vorzugsweise mindestens diejenige Stelle der mindestens einen Schneide gekennzeichnet wird, an der eine zu grosse Krafteinwirkung erwartet wird;
- Absetzen einer Nachricht (z.B. an ein Mobilsystem oder über ein Netzwerk);
- Starten einer (erneuten) Auslegungsroutine, um mindestens einen Verfahrensparameter des Bearbeitungsverfahrens ändern zu können.

Da das Verfahren mittels Prozess-Simulation und Span-Analyse die zu erwartende Krafteinwirkung berechnen kann, kann ein Softwaremodul vorgesehen sein, dass im Falle einer zu erwartenden lokalen Überlastung rückwärts ermittelt, welche Verfahrensparameter zu dieser lokalen Überlastung führen. Sobald diese Verfahrensparameter gefunden wurden, kann die Software in einem optionalen Schritt Änderungen vorschlagen. In diesem Fall kann der Benutzer aufgefordert werden eine vorgeschlagene Änderung zu akzeptieren. Dann werden vorzugsweise die Schritte mit dem/den geänderten Verfahrensparametern erneut durchgeführt. Am Ende der entsprechenden Optimierung verzweigt das Verfahren dann in Richtung der Bearbeitung des Zahnrad-Werkstücks.

Als Verfahrensparameter werden im Sinne der vorliegenden Beschreibung und Ansprüche unter anderem die folgenden Größen, Parameter, Werte verstanden:
- Schnittgeschwindigkeit, und/oder
- Vorschubgeschwindigkeit, und/oder
- Tauchgeschwindigkeit, und/oder
- Wälzgeschwindigkeit, und/oder
- Winkelgeschwindigkeit(en) in der Maschine, und/oder
- die Geschwindigkeit anderer Linearbewegungen in der Maschine, und/oder
- Art der Interpolation von Achsbewegungen der Maschine, und/oder
- Druck, und/oder
- Beschleunigung(en).

Als Verfahrensparameter werden im Sinne der vorliegenden Beschreibung und Ansprüche auch Regelgrößen und/oder Steuergrößen verstanden. Die Schneidengeometrie des/der Messer werden auch als Verfahrensparameter betrachtet, wie z.B. die Schneidkantenlage, Keilwinkel, Spanwinkel, Freiwinkel sowie die Präparation der Schneiden.

Als Verfahrensparameter werden im Sinne der vorliegenden Beschreibung und Ansprüche auch die Wahl des Messerkopfes und/oder die Messerkopfteilung, das Material der Messer und/oder die Wahl des Schneidprozesses (z.B. Tauchwälzen statt Einwälzen) betrachtet.

Falls sich aus dem Verfahren der Erfindung ergibt, dass sich an mindestens einer Stelle mindestens einer der Schneiden des Verzahnungswerkzeugs eine Krafteinwirkung ergeben sollte, die z.B. deutlich unterhalb eines Grenzwertes oder außerhalb eines Grenzbereichs liegt, so kann zum Zwecken des Optimierens des Verfahrens mindestens ein Verfahrensparameter des Bearbeitungsverfahrens so geändert werden, dass die Krafteinwirkung an der Stelle der betroffenen Schneide näher an dem Grenzwert oder innerhalb des Grenzbereichs liegt.

Da das Verfahren mittels Prozess-Simulation und Span-Analyse die zu erwartende Krafteinwirkung berechnen kann, kann ein Softwaremodul vorgesehen sein, dass im Falle einer zu geringen Belastung einer Schneide rückwärts ermittelt (z.B. nummerisch iterativ), welche Verfahrensparameter zu dieser zu geringen Belastung führen. Sobald diese Verfahrensparameter gefunden wurden, kann die Software in einem optionalen Schritt Änderungen vorschlagen. In diesem Fall kann der Benutzer aufgefordert werden eine vorgeschlagene Änderung zu akzeptieren. Dann werden vorzugsweise die Schritte mit dem/den geänderten Verfahrensparametern erneut durchgeführt. Am Ende der entsprechenden Optimierung verzweigt das Verfahren dann in Richtung der Bearbeitung des Zahnrad-Werkstücks.

Es gibt aber auch andere Schneidwerkzeuge (z.B. einteilige Messerköpfe), die im Rahmen des Verfahrens der Erfindung eingesetzt werden können. Generell geht es um Schneidwerkzeug, die mindestens zwei geometrisch bestimmte Schneiden an einem Messer oder an zwei unterschiedlichen Messern umfassen.

Durch den Einsatz der Erfindung können Zahnflanken mit qualitativ hochwertigen Oberflächen effizient und günstig/produktiv gefertigt werden, wobei die Krafteinwirkung auf die einzelnen Schneiden geplant/kontrolliert werden kann.

Als Ergebnis liefert der Einsatz der Erfindung Zahnräder, z.B. spiralverzahnte Kegelräder, mit hoher Genauigkeit und qualitativ hochwertigen Oberflächen, wobei die maximal mögliche Standzeit des Schneidwerkzeugs möglichst ausgenutzt wird.

Die Erfindung lässt sich insbesondere auf Verzahnungswerkzeuge anwenden, bei denen gleichzeitig mehr als nur eine geometrisch bestimmte Schneide spanabhebend zum Einsatz kommt. Insbesondere lässt sich die Erfindung aller Ausführungsformen auf Verzahnungswerkzeuge anwenden, die mit mindestens zwei Profilmessern oder mit mindestens zwei Stabmessern oder mit mindestens zwei Schneidplatten bestückt sind.

Die Erfindung ermöglicht es die maximal mögliche Standzeit des Schneidwerkzeugs auszunutzen, indem die thermischen und/oder mechanischen Überlastung von Verzahnungswerkzeugen durch gezielte Planung vermieden werden.

Mit Hilfe des Verfahrens der Erfindung kann die zu erwartende Belastung der Schneiden in einem Teil oder für alle (Zeit-)Abschnitte des spanenden Bearbeitungsverfahrens ermittelt werden. Sollten zu große Kräfte vorher gesagt werden, so kann/können z.B. andere Verfahrensparameter gewählt werden. Sollten zu geringe Kräfte vorher gesagt werden, so kann/können z.B. andere Verfahrensparameter gewählt werden, um so eine Optimierung zu erzielen.

### ZEICHNUNGEN

Ein Ausführungsbeispiel der Erfindung wird im Folgenden unter Bezugnahme auf die Zeichnungen näher beschrieben.
- **FIG. 1A**: zeigt eine schematische Illustration eines Einzelteilverfahrens gemäß Stand der Technik, um die Grundlagen eines Einzelteilverfahrens beschreiben zu können;
- **FIG. 1B**: zeigt eine schematische Illustration eines kontinuierlich wälzenden Teilverfahrens (z.B. ein Zyklo-Palloid-Verfahren), gemäß Stand der Technik, um die Grundlagen eines kontinuierlichen Teilverfahrens beschreiben zu können;
- **FIG. 1C**: zeigt eine schematische Schnittdarstellung einer ersten Bearbeitungsphase eines Semicompleting-Einzelteilverfahrens, gemäß Stand der Technik, während dem Fertigverzahnen einer linken Flanke und dem gleichzeitigen Vorverzahnen einer rechten Flanke eines Kegelrad-Werkstücks;
- **FIG. 1D**: zeigt eine schematische Schnittdarstellung einer zweiten Bearbeitungsphase des Semicompleting-Einzelteilverfahrens, gemäß Stand der Technik, während dem Fertigverzahnen der rechten Flanke des Kegelrad-Werkstücks der Fig. 1C;
- **FIG. 2A-2C**: zeigen Details eines beispielhaften ARCON-Messerkopfes der Firma Klingelnberg, gemäß Stand der Technik;
- **FIG. 3**: zeigt eine schematische Perspektivansicht einer Spanfläche und der drei Schneiden, die diese Spanfläche umgeben;
- **FIG. 4**: zeigt ein schematisches Flussdiagram der Schritte eines Verfahrens der Erfindung;
- **FIG. 5**: zeigt eine tabellarische Darstellung beispielhafter Zwischenergebnisse eines Verfahrens der Erfindung;
- **FIG. 6**: zeigt eine tabellarische Darstellung beispielhafter Zwischenergebnisse eines anderen Verfahrens der Erfindung;
- **FIG. 7A**: zeigt eine schematische Perspektivansicht einer Spanfläche und der drei Schneiden, die diese Spanfläche umgeben;
- **FIG. 7B**: zeigt in Form eines schematischen Diagramms die Krafteinwirkung auf die drei Schneiden als Funktion der Strecke x;
- **FIG. 7C**: zeigt eine tabellarische Darstellung beispielhafter Zwischenergebnisse eines Verfahrens der Erfindung gemäß Fig. 7B.

### DETAILLIERTE BESCHREIBUNG

Um die dynamisch wechselnden Lasten, die an einem Verzahnungswerkzeug auftreten können, besser beschreiben zu können, wird im Folgenden beispielhaft und rein schematisch auf ein Messerkopfsystem der Firma Klingelnberg Bezug genommen.

Es handelt sich hier um ein Messerkopfsystem, das zur Anwendung für ein einzeln teilendes Verzahnverfahren (Einzelteilverfahren) ausgelegt ist. Die Grundaspekte eines solches Einzelteilverfahren wurden eingangs anhand der Fig. 1A erläutert. Die Erfindung lässt sich auch auf ein kontinuierlich teilendes Verfahren, wie eingangs anhand der Fig. 1B erläutert, und auf andere Prozesse anwenden.

In der eingangs beschriebenen Fig. 2A ist durch einen Pfeil S die Schneidkraft angedeutet (die Länge des Pfeils ist proportional zur Größe der Kraft und die Orientierung deutet die Richtung an). Die Schneidkraft S steht im Wesentlichen senkrecht zur Spanfläche 27. Diese Schneidkraft S ist ein Vektor, der eine Funktion der Zeit t ist, daher wird hier auch das Bezugszeichen S(t) verwendet.

Da es hier um die Krafteinwirkung auf die Schneiden des Werkzeugs 20 geht, wurde in Fig. 3 die Schneidkraft S in drei kleiner Pfeile bzw. Vektoren K.i, K.a und K.k zerlegt, die entgegengesetzt wirken. Es wird hier eine Kraftaufteilung vorgenommen, um die Kräfte, die auf die einzelnen Schneiden einwirken, genauer beurteilen zu können.

Die drei Vektoren K.i, K.a und K.k bilden im 3-dimensionalen Raum zusammen mit der Schneidkraft S ein Kräftegleichgewicht. K.i beschreibt die Summe aller Teilkräfte, die auf die Innenschneide 21.i einwirken, K.a beschreibt die Summe aller Teilkräfte, die auf die Aussenschneide 21.a einwirken und K.k beschreibt die Summe aller Teilkräfte, die auf die Kopfschneide 21.k einwirken. Es handelt sich hier jedoch nur um eine stark vereinfachte Momentaufnahme auf der Zeitachse.

Während des Verzahnens eines Zahnrad-Werkstücks 11 mit den Schneiden des Werkzeugs 20, unterliegen die Summen dieser Teilkräfte einer stetigen Veränderung. Dabei kann sich nicht nur deren Größe sondern auch deren Orientierung verändern. Außerdem können die Ansatzpunkte entlang der Schneiden wandern. Als Ansatzpunkte werden diejenigen Punkte der Schneiden bezeichnet, an denen die Summen der jeweiligen Teilkraft K.i, K.a und K.k ansetzen.

Da das Werkzeug 20 durch eine Werkzeugspindel einer Maschine drehangetrieben wird, deren Dimensionen bekannt sind, können die relativen Kräfte auch stets als relative Drehmomente ausgedrückt werden. Wenn die Orientierung und Länge der Schneiden im Raum, und der Abstand der relativen Kräfte zur Rotationsachse der Werkzeugspindel bekannt ist, so können die relativen Kräfte in relative Drehmomente umgerechnet werden.

Bei allen Ausführungsformen können relative Kräfte und/oder relative Drehmomente verwendet werden, um die Krafteinwirkung auf mindestens zwei Schneiden beurteilen zu können. Da der Spindelantrieb der Werkzeugspindel mit Strom gespeist wird, kann bei allen Ausführungsformen z.B. auch die Stromaufnahme des Spindelantriebs (oder einer Wicklung des Spindelantriebs) pro Millimeter Schneidenlänge verwendet werden.

Bei einem Tauchprozess ergeben sich beispielsweise am Zahnrad-Werkstück gerade Zahnflanken aus den geraden Schneiden des Verzahnungswerkzeugs 20. Beim wälzenden Prozess ergeben sich die Zahnflanken am Zahnrad-Werkstück durch die Einhüllende zahlreicher Hüllschnitte. In diesem Fall sind die Bewegungen deutlich komplexer und auch die Kräfte, die an den Schneiden auftreten sind nur mit einem deutlichen grösseren Rechenaufwand zu bestimmen.

Falls beim Verzahnen von Zahnrad-Werkstücken z.B. Modifikationen der Zahnflankentopografie vorgenommen werden, so sind die entsprechenden Relativbewegungen von Verzahnungswerkzeug und Zahnrad-Werkstück noch wesentlich komplexer.

Entsprechend kann sich auch die Größe, Orientierung und der Ansatzpunkt der Schneidkraft S ändern, wobei die Schneidkraft S, wie bereits erwähnt, mit den Teilkräften K.i, K.a und K.k ein Kräftegleichgewicht bildet. Die Teilkräfte sind daher auch Funktionen der Zeit t, wie durch die Bezugszeichen K.i(t), K.a(t) und K.k(t) angedeutet.

Bei allen Ausführungsformen können die Schneiden in kleinere Abschnitte unterteilt werden (z.B. in einzelne Strecken oder Punkte). In diesem Fall werden auch die relativen Kräfte und/oder die relativen Drehmomente und/oder die relativen Strom- und/oder Leistungsaufnahmen in Abschnitte unterteilt.

Wie eingangs im Zusammenhang mit den Figuren 1A - 1D beschrieben, kann die Anzahl von Messern variieren, die zu einem gegebenen Zeitpunkt spanend arbeiten. D.h. die gesamte Antriebskraft (respektive die Stromaufnahme) des Spindelantriebs der Werkzeugspindel des Werkzeugs 20 wird in mehrere Schneidkräfte S zerlegt, die jeweils eine andere Größe, Orientierung und einen anderen Ansatzpunkt an den im Einsatz befindlichen Spanflächen 27 haben können. Wenn das Verzahnungswerkzeug 20 trotz der sich zeitlich ändernden Gegenkräfte z.B. mit einer konstanten Drehzahl der Werkzeugspindel angetrieben werden soll, dann muss die NC-Steuerung des Spindelantriebs permanent den Strom nachregeln. Bei zunehmenden Teilkräften an den Schneiden muß der Spindelantrieb mit einem grösseren Antriebdrehmoment antworten, d.h. der Strom, der eingeprägt wird, muss erhöht werden. Wenn sich die Summe der Teilkräfte reduziert, dann muss der Strom reduziert werden, um das Antriebsdrehmoment zu reduzieren, um somit die Drehzahl konstant zu halten.

Die Erfindung geht von einem Ansatz aus, der er ermöglichen soll die relative Krafteinwirkung auf die Schneiden eines Verzahnungswerkzeugs möglichst genau zu kontrollieren und Zusammenhänge/Wirkung einzelner Verfahrensparameter zu erkennen.

Gemäß Erfindung können vor dem eigentlichen Verzahnen die zu erwartenden Kräfte K.i. K.a und K.k als Funktion der Zeit berechnet werden.

Wenn man pro Schneide nur eine Krafteinwirkung annimmt und wenn man vereinfachend annimmt, dass die Kräfte über die gesamten Schneidenlängen wirken (was nicht auf die Momentaufnahme der Fig. 1C zutrifft), dann kann die relative Krafteinwirkung dadurch berechnet werden, dass man die aktuell wirkende Kraft jeweils durch die absolute Schneidenlängen teilt. 1000N, die auf eine Schneide mit kurzer Schneidenlänge wirken, ergeben eine deutlich höhere relative Krafteinwirkung als 1000N, die auf eine Schneide mit längerer Schneidenlänge wirken.

Bei allen Ausführungsformen kann pro Schneide eine schneidenspezifische Maximalkraft definiert werden und/oder es kann pro Schneide eine relative, schneidenspezifische, maximale Krafteinwirkung definiert werden.

Es geht somit bei allen Ausführungsformen um eine relative Größen, die in irgendeiner Form auf Schneiden des Verzahnungswerkzeugs bezogen sind.

Um die verschiedenen Varianten dieses erfindungsgemäßen Ansatzes abdecken zu können, werden diese relativen Größen hier als relative, schneidenspezifische Kraftangabe oder kurz als relative, schneidenspezifische Kraft bezeichnet. D.h., es kann sich bei diesen relativen Größen z.B. um eine (Maximal-)Kraft bezogen auf eine bestimmte Schneide handeln, oder es kann sich um eine (Maximal-)Kraft bezogen auf eine Geometrieangabe (z.B. eine (Teil-)Länge, (Teil-)Fläche oder ein (Teil-)Volumen) einer bestimmte Schneide handeln. Die Fläche und das Volumen hängen direkt mit der (Teil-)Länge der entsprechenden Schneide zusammen. Eine Umrechnung ist daher möglich.

Wie bereits erwähnt, können statt der Kraft auch Drehmomente und/oder die Stromaufnahme als relative Größen verwendet werden.

Außerdem gibt es auch einen direkten Zusammenhang zwischen der Kraft, die auf eine (Teil-)Länge der entsprechenden Schneide einwirkt und der Schnittarbeit, die auf das entsprechende (Teil-)Volumen zum Trennen eines Spans einwirkt.

Bei Ausführungsformen, die mit einer relativen Kraft arbeiten, die auf eine bestimmte Schneide bezogen ist, kann diese relative Kraft z.B. für das erste Messer eines Werkzeugs 20 als K.i1 [N] für die Innenschneide, als K.a1 [N] für die Aussenschneide und als K.k1 [N] für die Kopfschneide definiert sein. Die relative Kraft für das zweite Messer desselben Werkzeugs 20 wird dann als K.i2 [N] für die Innenschneide, als K.a2 [N] für die Aussenschneide und als K.k2 [N] für die Kopfschneide definiert, usw. Somit kann jeder Schneide eines jeden Messers eines Werkzeugs 20 eine relative Kraft zugewiesen werden. Die hier verwendete Nomenklatur ist nur als Beispiel zu verstehen.

Wenn ein Werkzeug 20 z.B. mehrere Messergruppen umfasst (z.B. ein Aussenmesser, ein Mittenschneider und ein Innenmesser), dann können bei allen Ausführungsformen jedem Messer einer solchen Gruppe beispielweise dieselben relativen Kräfte zugewiesen werden.

Um eine temporäre Überbeanspruchung oder gar das Versagen einer Schneide zu verhindern, können bei allen Ausführungsformen jeweils Maximalwerte (als Grenzwerte) individuell für jede Schneide vorgeben werden.

Die Kraft kann jeweils als absoluter Wert in N ausgedrückt werden, wenn die Länge der jeweiligen Schneide eine bekannte Größe ist. Einer Aussenschneide 21.a, deren Länge z.B. 20mm beträgt, kann z.B. eine maximale relative Kraft K.aₘₐₓ = 2000 N zugewiesen werden (das Wort "relativ" deutet in diesem Zusammenhang an, dass die Kraft auf eine spezifische Schneide bezogen ist). Das entspricht im Prinzip einer relativen, schneidenspezifischen Maximalkraft von rK.aₘₐₓ = 2000 N / 20 mm = 100 N/mm.

Durch diesen Ansatz ist es möglich zu verhindern, dass an einzelnen Schneiden momentan und/oder lokal zu grosse Kräfte während des Verzahnens eines Zahnrad-Werkstücks auftreten.

Zu diesem Zweck kann, je nach Ansatz und Ausführungsform z.B. die relative Krafteinwirkung auch als Kraft pro Längeneinheit einer Schneide, als Drehmoment pro Längeneinheit einer Schneide, als Kraft pro Volumeneinheit einer Schneide, als Drehmoment pro Volumeneinheit einer Schneide, oder als Stromaufnahme pro Längeneinheit einer Schneide definiert werden. Um bei dem Zahlenbeispiel zu bleiben, das zuvor von der Kraft K.aₘₐₓ = 2000 N ausging, kann die relative Krafteinwirkung als Kraft pro Längeneinheit dieser Schneide mit dem Maximalwert 100 N/mm (als Grenzwert) festgelegt werden.

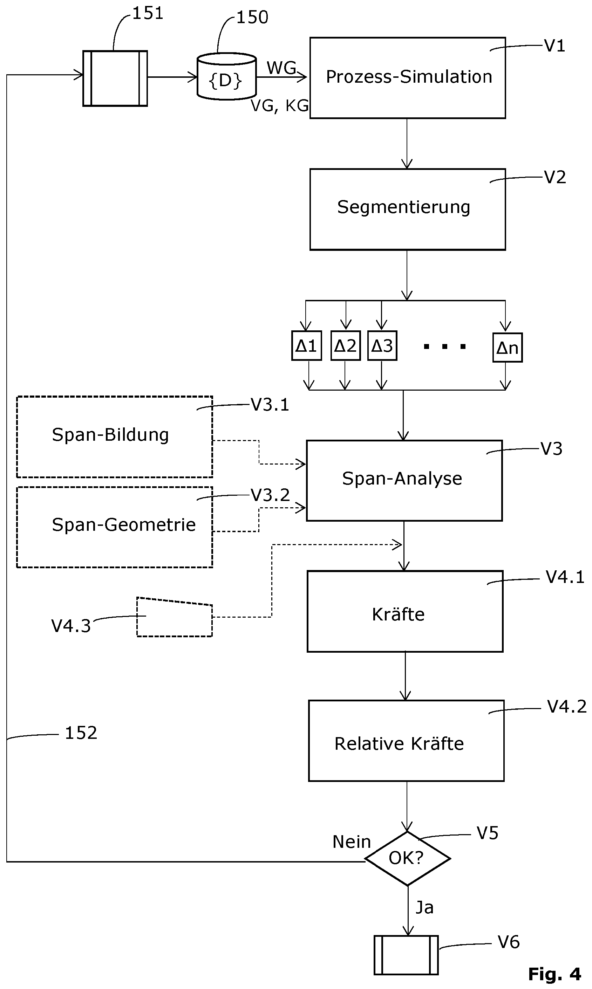

Anhand der Fig. 4, die ein Flussdiagramm in schematisierter Form zeigt, werden die beispielhaften Schritte einer ersten Ausführungsform eines Verfahrens der Erfindung beschrieben.

Das Verfahren kann bei allen Ausführungsformen beispielweise mit der Simulation (hier auch als Planung bezeichnet) eines Verzahnungsprozesses beginnen. Ein erster vorbereitender Schritt ist in Fig. 4 mit dem Bezugszeichen V1 versehen. Hier kann z.B. das Wälzfräsen eines Kegelrad-Werkstücks rechnerisch (d.h. computergestützt) simuliert werden. Es kann zur Simulation des Verzahnungsprozesses beispielweise eine geeignete Software verwendet werden (z.B. Software, die mittels FEM arbeitet).

Die rechnerische (d.h. computergestützte) Simulation im Schritt V1 kann z.B. durch Daten {D} gespeist werden, wie in Fig. 4 angedeutet. Diese Daten {D} können einem Speicher 150 entnommen werden. Die Daten {D} können zuvor, zum Beispiel im Rahmen einer Auslegung des zu bearbeitenden Zahnrad-Werkstücks, durch eine Kombination aus Rechner und Software 151 bereitgestellt werden. Die Daten {D} können aber auch direkt (ohne (Zwischen)Speicherung) durch eine Kombination aus Rechner und Software 151 an den Schritt V1 übergeben werden.

Die rechnerische (d.h. computergestützte) Simulation im Schritt V1 kann bei allen Ausführungsformen z.B. mit Angaben/Daten zur 3-dimensionalen Definition des Zahnrad-Werkstücks, hier als WG bezeichnet, gespeist werden.

Die rechnerische (d.h. computergestützte) Simulation im Schritt V1 kann bei allen Ausführungsformen z.B. mit Angaben/Daten zur 3-dimensionalen Definition des Verzahnungswerkzeugs 20 und/oder der relevanten Schneiden, hier als VG bezeichnet, gespeist werden. Die Angaben/Daten können beispielsweise die Geometrie des mit Stabmessern 23 bestückten Messerkopfs 20 und die Schneidengeometrie (z.B. als 2- oder 3-dimensionaler Polygonenzug) beschreiben.

Die rechnerische (d.h. computergestützte) Simulation im Schritt V1 kann bei allen Ausführungsformen z.B. mit Angaben/Daten zur Definition der Maschine und/oder der Kinematik, hier als KG bezeichnet, gespeist werden.

Diese Größen werden hier zusammenfassend als Verfahrensparameter bezeichnet.

In Fig. 4 ist angedeutet, dass die Simulation im Schritt V1 mit Angaben/Daten WG und/oder VG und/oder KG gespeist werden kann.

In einem nachfolgenden Schritt V2, kann beispielweise eine Art Segmentierung vorgenommen werden. Als Segmentierung wird hier ein Teilverfahren bezeichnet, das es ermöglicht den Verzahnungsprozess in Zeitfenster und/oder Längenabschnitte und/oder volumetrische Grössenabschnitte zu zerlegen.

In Fig. 4 ist das Ergebnis der Segmentierung V2 durch mehrere Quadrate dargestellt, die mit den Bezugszeichen Δ1 bis Δn versehen sind. n bezeichnet hier die Anzahl der Segmente. Umso grösser die Anzahl n der Segmente ist, um so genauer lassen sich Aussagen über die Spanbildung und die auftretenden Kräfte an den einzelnen Abschnitten der Schneiden des aktiven Bereichs 26 treffen.

Umso komplexer der Verzahnungsprozess, d.h. umso mehr dynamische Laständerungen beim Verzahnen erwartet werden, umso mehr Segmente Δn (z.B. Zeitfenster und/oder Längenabschnitte und/oder volumetrische Grössenabschnitte) sollten zur Anwendung kommen. Ein Verzahnungsprozess, der nur geringen Lastschwankungen unterliegt, kann durch einige wenige Zeitfenster, Längenabschnitte bzw. volumetrische Grössenabschnitte ausreichend genau definiert werden. Ein Verzahnungsprozess, der zahlreichen Lastschwankungen unterliegt, sollte hingegen durch mehr Zeitfenster, Längenabschnitte bzw. volumetrische Grössenabschnitte definiert werden.

Für jedes der n Segmente kann bei allen Ausführungsformen beispielsweise die Geometrie der zu erwartenden Späne rechnerisch ermittelt werden. Die Ermittlung der Spangeometrie kann beispielweise anhand einer Durchdringungsrechnung vorgenommen werden, wobei diese Durchdringungsrechnung die Bewegung der Schneiden des aktiven Bereichs 26 durch das Material des Zahnrad-Werkstücks beschreibt. Bei der Durchdringungsrechnung kann z.B. für jedes der n Segmente der aktuelle Werkzeughüllkörper anhand der Schneidengeometrie und der Kinematik durch Subtraktion zweier Flächen oder Körper berechnet werden. Aus dem aktuellen Werkzeughüllkörper kann z.B. die Geometrie der Späne errechnet werden. Im Rahmen der Durchdringungsrechnung kann z.B. für jedes der n Segmente auch berechnet werden, welcher Bereich des Werkstücks von welchem (Längen-) Abschnitt der Werkzeugschneiden zerspant wird. Die entsprechenden Längenangaben sind erforderlich, wenn das Verfahren der Erfindung die Krafteinwirkung bezogen auf die aktuell im Einsatz befindliche Schneidlänge (z.B. in N pro Millimeter) berücksichtigt.

In einem nachfolgenden Schritt V3 wird eine computergestützte Span-Analyse vorgenommen.

Falls in einem der n Segmente mehr als nur ein Span entsteht (z.B. da es zu einem Spanabriss kommt), so kann im Rahmen der Span-Analyse V3 z.B. ein Mittelwert aller Späne für dieses Segment gebildet werden. Auf diesem Weg erhält man für das entsprechende Segment die Geometrie eines mittleren fiktiven Spans. In den weiteren Schritten kann dann die Geometrie des mittleren fiktiven Spans verwendet werden.

Falls in einem der n Segmente mehr als nur ein Span entsteht, so kann im Rahmen der Span-Analyse V3 z.B. eine statistische Auswertung aller Späne für dieses Segment vorgenommen werden. Auf diesem Weg erhält man für das entsprechende Segment die Geometrie eines statistischen fiktiven Spans. In den weiteren Schritten kann dann die Geometrie des statistischen fiktiven Spans verwendet werden.

Falls in einem der n Segmente mehr als nur ein Span entsteht, so kann alternativ im Rahmen der Span-Analyse V3 z.B. eine Maximalwertbetrachtung durchgeführt werden, um z.B. den grössten (dicksten) Span für das entsprechende Segment zu ermitteln. In den weiteren Schritten kann dann die Geometrie des grössten (dicksten) Spans verwendet werden. Bei der Maximalwertbetrachtung wird davon ausgegangen, dass beim Erzeugen des grössten (dicksten) Spans auch die grössten Kräfte an den Schneiden des aktiven Bereichs 26 auftreten.

Die Span-Analyse V3 kann bei allen Ausführungsformen, wie in Fig. 4 angedeutet, als ein Funktionsblock oder Modul aufgelegt sein, wobei dieser Funktionsblock bzw. dieses Modul die Geometrie der Späne der n Segmente auswertet. Wenn keine Segmentierung geometrischer Größen vorgenommen wird, dann kann der Funktionsblock oder das Modul die Geometrie der Späne der Schneiden auswerten.

Die Span-Analyse V3 kann bei allen Ausführungsformen auf einer Berechnung, Bewertung oder Betrachtung der Geometrie der Späne basieren (optionaler Schritt V3.2 in Fig. 4). Über die Geometrie wird dann in einem nachfolgenden Schritt (z.B. Teilschritte V4.1, V4.2 in Fig. 4) eine Aussage über die Kräfte vorgenommen, die an den Schneiden des aktiven Bereichs 26 auftreten.

Es können Grenzwerte und/oder Grenzbereiche vorgegeben sein (diese können z.B. aus einem Speicher geladen werden), oder ein Benutzer kann zur Eingabe von einem oder mehreren Grenzwerten (z.B. rKₘₐₓ) aufgefordert werden, was in Fig. 4 durch den optionalen Schritt V4.3 angedeutet ist.

Die Span-Analyse V3 kann bei allen Ausführungsformen aber auch auf einer Berechnung, Bewertung oder Betrachtung des Vorgangs der Spanbildung beruhen (optionaler Schritt V3.1 in Fig. 4). Es wird dann in einem nachfolgenden Schritt, basierend auf dem Vorgang der Spanbildung, eine Aussage über die Kräfte vorgenommen (z.B. Teilschritte V4.1, V4.2 in Fig. 4), die an den Schneiden des aktiven Bereichs 26 auftreten.

Die Span-Analyse V3 kann bei allen Ausführungsformen aber auch n parallele Funktionsblöcke oder Module umfassen, wobei quasi parallel jeder der Funktionsblöcke oder Module die Geometrie der Späne einer der Schneiden oder eines der n Segmente auswertet.

Um eine Aussage über die relative Krafteinwirkung auf die Schneiden eines Verzahnungswerkzeugs machen zu können (z.B. Teilschritt V4.1, V4.2 in Fig. 4), werden bei einem Teil oder bei allen Ausführungsformen der Erfindung die Verfahrenskräfte analytisch ermittelt (z.B. aus der Geometrie der Späne V3.2 und/oder aus dem Vorgang der Spanbildung V3.1), die beim spanenden Verzahnen auf die verschiedenen Schneiden des aktiven Bereichs 26 eines Messers einwirken.

Um eine Aussage über die relative Krafteinwirkung auf die Schneiden eines Verzahnungswerkzeugs machen zu können (z.B. Teilschritte V4.1, V4.2 in Fig. 4), werden bei einem Teil oder bei allen Ausführungsformen der Erfindung die Verfahrenskräfte dynamisch analytisch ermittelt, d.h. es werden die sich mit der Zeit t ändernden Relativbewegungen in die Analyse mit einbezogen.

Bei mindestens einem Teil der Ausführungsformen werden für die Spanbildung (optionaler Schritt V3.1 in Fig. 4) am Zahnrad-Werkstück die Kräfte ermittelt, die zum Abscheren des Materials des Zahnrad-Werkstücks führen. Dabei kann z.B. ein mechanistisches Modell Anwendung finden, das die Bildung von Scherebenen und/oder Scherzonen abbildet. D.h. in diesem Fall geht man den Weg über eine Modellierung des Umformvorgangs.

Bei mindestens einem Teil der Ausführungsformen wird für die Spanbildung (optionaler Schritt V3.1 in Fig. 4) am Zahnrad-Werkstück ein linearer Zusammenhang zwischen der Spanungsdicke und der entsprechenden Zerspankraft angenommen, was den Aufwand zum analytischen Ermitteln der Verfahrenskräfte reduzieren hilft.

Bei mindestens einem Teil der Ausführungsformen kann für die Spanbildung (optionaler Schritt V3.1 in Fig. 4) am Zahnrad-Werkstück auch ein Potential-Modell oder ein Exponential-Modell zur Anwendung kommen.

Beim Modellieren des Umformvorgangs oder beim Verwenden eines linearen, potentiellen oder exponentiellen Modells kann man beispielsweise auf existierende Modelle und/oder Daten zurück greifen, oder es können eigene Modelle und/oder Daten und/oder Analysen zur Anwendung kommen. Die Daten können z.B zuvor anhand von Erfahrungswerten definiert werden und/oder experimentell und/oder empirisch und/oder analytisch ermittelt werden.

Wie in Fig. 4 beispielhaft dargestellt, kann das Ermitteln der Kräfte optional in zwei Teilschritte V4.1, V4.2 unterteilt werden, wobei diese Unterteilung hier nur zu besseren Veranschaulichung vorgenommen wurde. Die entsprechenden Kräfte können auch in einem Schritt ermittelt werden.

Nach der Span-Analyse im Schritt V3, können die absoluten Kräfte ermittelt werden (Teilschritt V4.1), die beim Zerspanen des Zahnrad-Werkstücks auftreten. Diese Kräfte können beispielweise als Funktion der Zeit ermittelt werden, oder die Kräfte können z.B. für jedes der Segmente n ermittelt werden.

Aus diesen Kräften können dann die relativen Kräfte in einem Teilschritt V4.2 ermittelt werden. Die relativen Kräfte zeichnen sich dadurch aus, dass sie, wie bereits beschrieben, einen Bezug zu den im Einsatz befindlichen Schneiden haben.

Es wurde bereits zuvor eine mögliche Nomenklatur für die Bezeichnung der relativen Kräfte beschrieben, die hier zur Anwendung kommen kann. Diese Nomenklatur ist lediglich als Bespiel zu verstehen und soll der besseren Erläuterung der Zusammenhänge dienen.

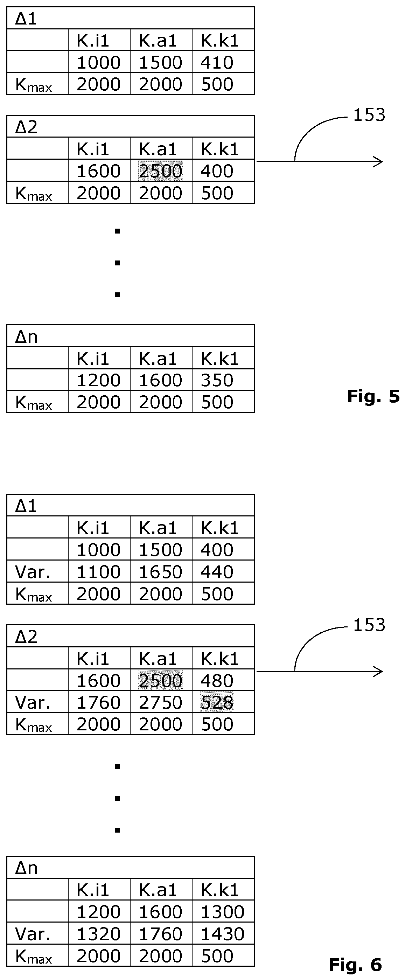

In Fig. 5 ist anhand von n Tabellen (jede dieser Tabelle spiegelt die relativen Kräfte wieder, die für eines der Segmente 1 - n auftreten) das Ergebnis des Teilschritts V4.2 dargestellt. Jede der n Tabellen trägt in der obersten Zeile die Bezeichnung des betroffenen Segments (z.B. Δ1). Dann folgen drei Spalten K.i1, K.a1, K.k1, wobei K.i1 die relative Kraft in [N] angibt, die auf die Innenschneide 21.i einwirkt, K.a1 die relative Kraft in [N] angibt, die auf die Aussenschneide 21.a einwirkt, und K.k1 die relative Kraft in [N] angibt, die auf die Kopfschneide 21.k einwirkt.

Wie in Fig. 5 zu erkennen ist, umfassen die n Tabellen eine unterste Zeile, in der für jede der drei Schneiden 21.i, 21.a, 21.k eine individuelle Maximalkraft als Grenzwert in [N] angegeben werden kann. Bei dem vorliegenden Zahlenbeispiel wurde für jede der Schneiden 21.i, 21.a für jedes der n Segmente 2000N als oberer Grenzwert vorgegeben. Für die Kopfschneide 21.k wurde für jedes der n Segmente 500N als oberer Grenzwert vorgegeben.

Eine Betrachtung dieser Zahlenbeispiele ergibt das folgende Bild. Während des ersten Segments n=1 liegen alle Kräfte deutlich unterhalb der 2000N bzw. der 500N. Während des zweiten Segments n=2 übersteigt jedoch die Kraft an der Aussenschneide 21.a die 2000N um 500N. Das entsprechende Feld der Tabelle ist grau hinterlegt. Während des letzten Segments n liegen alle Kräfte wieder unterhalb der 2000N bzw. der 500N.

Die Ermittlung der relativen Kräfte (Schritt V4.2) wird vorzugsweise bei allen Ausführungsformen computergestützt durchgeführt, um vor dem eigentlichen spanenden Bearbeiten des Zahnrad-Werkstücks mit den Schneiden eines Werkzeugs die zu erwartenden Kräfte beurteilen zu können.

Der Schritt V4.2 würde im gezeigten Beispiel dem Bediener der Maschine oder einem anderen Anwender anzeigen oder mitteilen, dass es während des zweiten Segments n=2 zu einer unzulässig hohen Krafteinwirkung beispielweise auf die Aussenschneide 21.a kommen kann.

Der Bediener/Anwender kann nun entscheiden, ob er das spanenden Bearbeiten des Zahnrad-Werkstücks in der geplanten Form trotzdem durchführen will, oder ob er z.B. die Vorgaben für die Prozess-Simulation, die als Schritt V1 bezeichnet wurde, ändern will. Zu diesem Zweck kann das Verfahren z.B. zurück zu der Kombination aus Rechner und Software 151 führen, um z.B. eine andere Auslegung zu ermöglichen und/oder um eine andere Kinematik (z.B. mit reduzierter Schnitttiefe) vorzugeben. Das Wählen einer anderen Auslegung und/oder einer anderen Kinematik wird hier als Anpassung der Verfahrensparameter bezeichnet.

In Fig. 4 ist die Berechnung, das Bewerten oder Betrachten der Ergebnisse des Schritts V4.2 mit dem Bezugszeichen V5 bezeichnet. Falls alle Werte okay sind, oder falls der Bediener/Anwender das spanenden Bearbeiten des Zahnrad-Werkstücks in der geplanten Form trotzdem durchführen möchte, folgt die verzahnende Bearbeitung im Schritt V6.

Falls mindestens einer der Werte nicht okay ist, kann das Verfahren beispielsweise, wie in Fig. 4 durch den Zweig 152 angedeutet, zurück zur Auslegung verzweigen.

Der Pfeil 153 zeigt in Fig. 5 an, dass das Verfahren generell hier verzweigen kann (z.B. wie in Fig. 4 gezeigt).

Falls sich aus dem Verfahren der Erfindung ergibt, dass an mindestens einer Stelle mindestens einer der Schneiden des Verzahnungswerkzeugs eine Krafteinwirkung ergeben sollte, die über einem Grenzwert liegt, so kann das Verfahren eine oder mehrere der folgenden Reaktionen vorsehen/auslösen:
- Absetzen einer Warnung (optisch und/oder akustisch);
- Erzeugen einer (grafischen) Darstellung auf einem Bildschirm, wobei vorzugsweise mindestens diejenige Stelle der mindestens einen Schneiden gekennzeichnet wird, an der eine zu grosse Krafteinwirkung erwartet wird;
- Absetzen einer Nachricht (z.B. an ein Mobilsystem oder über ein Netzwerk);
- Starten einer (erneuten) Auslegungsroutine, um mindestens einen Verfahrensparameter des Bearbeitungsverfahrens ändern zu können.

Da das Verfahren mittels der Prozess-Simulation V1 und der Span-Analyse V3 die zu erwartende Krafteinwirkung berechnen kann, kann optional auch ein Softwaremodul vorgesehen sein, dass im Falle einer zu erwartenden lokalen Überlastung rückwärts ermittelt, welche Verfahrensparameter zu dieser lokalen Überlastung führen. Sobald diese Verfahrensparameter gefunden wurden, kann die Software in einem optionalen Schritt Änderungen vorschlagen (z.B. als Darstellung auf einem Bildschirm). In diesem Fall kann der Benutzer aufgefordert werden eine vorgeschlagene Änderung zu akzeptieren (z.B. durch das Betätigen einer Tastenkombination). Dann werden vorzugsweise die Schritte V1-V5 mit dem/den geänderten Verfahrensparametern erneut durchgeführt. Im Schritt V5 verzweigt das Verfahren dann in Richtung V6.

Nach einer erneuten Auslegung, oder nach einer geänderten Auslegung, d.h. sobald geänderten Verfahrensparameter vorliegen, können die Schritte V1 bis und mit V5 erneut durchlaufen werden.

Da das Berechnen der Spangeometrie, respektive der Spandicke während der verschiedenen Phasen des spanabhebenden Verfahrens nicht immer ganz exakt sein kann, kann bei allen Ausführungsformen der Erfindung eine Varianz der Spandicke berücksichtigt werden. Wenn z.B. Versuche ergeben haben, dass die berechnete Spandicke ±10% schwanken kann, dann kann man z.B. die aktuell ermittelten Werte der Tabellen mit einer Varianz (Var. abgekürzt) von ±10% versehen. Ein entsprechendes Zahlenbeispiel ist in Fig. 6 gezeigt.

Eine Betrachtung dieser Zahlenbeispiele der Fig. 6 ergibt das folgende Bild. Während des ersten Segments n=1 liegen alle Kräfte deutlich unterhalb der 2000N bzw. der 500N. Während des zweiten Segments n=2 kann jedoch die Kraft an der Aussenschneide 21.a die 2000N um 750N übersteigen und die Kraft an der Kopfschneide 21.k kann die 500N um 28N übersteigen. Die entsprechenden Felder der Tabelle sind grau hinterlegt. Hier verzweigt das Verfahren zurück, wie durch den Pfeil 153 symbolisiert. Während des letzten Segments n liegen alle Kräfte wieder unterhalb der 2000N bzw. der 500N.

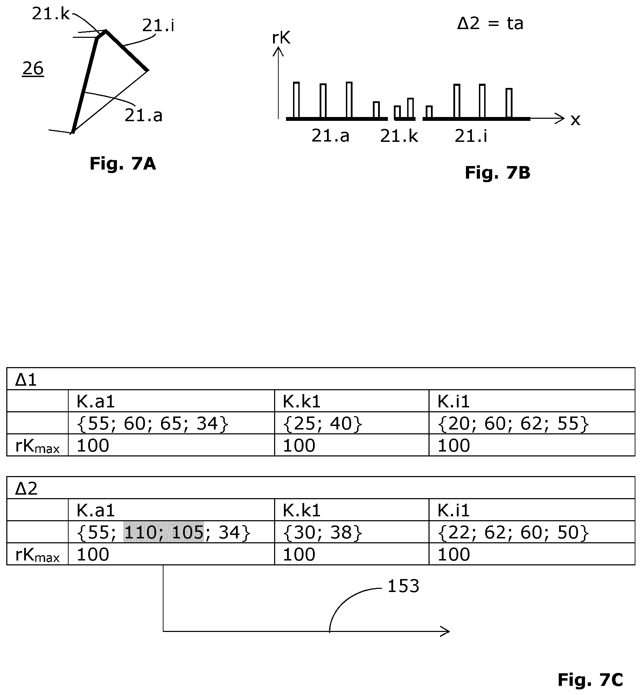

In den Figuren 7A und 7B sind anhand eines weiteren Beispiels Details einer anderen Ausführungsform gezeigt. Fig. 7A zeigt, analog zu Fig. 3, Details des aktiven Bereichs 26 z.B. eines Stabmessers. Die drei Schneiden dieses Stabmessers sind, wie bereits beschrieben, mit Bezugszeichen 21.a, 21.i und 21.k versehen. Fig. 7B zeigt nun eine lineare Anordnung dieser drei Schneiden 21.a, 21.i und 21.k, wobei auf der vertikalen Achse die relative Kraft rK (z.B. in [N/mm]) und auf der horizontalen Achse die Strecke x aufgetragen sind. Die Krafteinwirkung auf die Schneiden 21.a, 21.i und 21.k kann beispielweise als eine Funktion der Strecke x dargestellt werden. In Fig. 7B ist jedoch ein Beispiel dargestellt, bei dem an vier Stellen der Aussenschneide 21.a und an vier Stellen der Innenschneide 21.i die jeweils wirkende relative Kraft durch einen Balken dargestellt ist. Die relative Kraft, die an der Kopfschneide 21.k wirkt, ist durch zwei Balken dargestellt.

Als Segment Δ2, das z.B. ein Zeitfenster definieren kann, ist hier ein Zeitpunkt t = ta festgelegt worden.

Die Krafteinwirkung auf die Schneiden 21.a, 21.i und 21.k kann bei allen Ausführungsformen pro Segment Δn in Form von einem oder mehreren diskreten Werten (hier durch Balken dargestellt) ermittelt werden, oder die Krafteinwirkung auf die Schneiden 21.a, 21.i und 21.k kann bei allen Ausführungsformen pro Segment Δn z.B. in Form einer Funktion der Strecke x ermittelt werden.

Falls die Krafteinwirkung z.B. als Funktion der Strecke x vorliegt, so kann bei allen Ausführungsformen anhand einer Maximalwertuntersuchung das Maximum der entsprechenden Kurvenverläufe ermittelt werden. Dieser Maximalwert kann dann verwendet werden, um zu ermitteln, ob ein vorgegebener Maximalwert als Grenzwert (z.B. 100N/mm) überschritten wird.

In Fig. 7C ist anhand von 2 Tabellen (jede dieser Tabellen spiegelt die relativen Kräfte wieder, die für eines der Segmente Δ1 und Δ2 auftreten) das Ergebnis des Teilschritts V4.2 dargestellt. Jede der 2 Tabellen trägt in der obersten Zeile die Bezeichnung des betroffenen Segments (Δ1 und Δ2). Dann folgen drei Spalten K.a1, K.k1, K.i1, wobei für K.i1 die Datenmenge der relativen Kräfte in [N/mm] angeben ist, die auf die Innenschneide 21.i einwirken, für K.a1 die Datenmenge der relativen Kräfte in [N/mm] angeben ist, die auf die Aussenschneide 21.a einwirken, und K.k1 die Datenmenge der relativen Kräfte in [N/mm] angeben ist, die auf die Kopfschneide 21.k einwirken. Die beiden Datenmengen der Aussenschneide 21.a und der Innenschneide 21.i umfassen hier je vier diskrete Werte und die Datenmenge Kopfschneide 21.k umfasst zwei diskrete Werte.

Eine Betrachtung dieser Zahlenbeispiele der Fig. 7C ergibt das folgende Bild. Während des ersten Segments n=1 liegen alle Kräfte deutlich unterhalb der 100N/mm, die als Grenzwert rKₘₐₓ vorgegeben wurde. Während des zweiten Segments n=2 übersteigt die relative Kraft an der Aussenschneide 21.a die 100N/mm mit einem Wert um 10N/mm und mit einem Wert von 5N/mm. Die entsprechenden Werte der Tabelle sind grau hinterlegt. Auch hier verzweigt das Verfahren zurück, wie durch den Pfeil 153 symbolisiert.

Anstelle von Tabellen ist auch eine interaktive grafische Darstellung möglich in der über der Schneide (z.B. als Projektion in eine Zeichnungseben oder auch 3D) die jeweilige relative Belastung grafisch (farbcodiert und höhencodiert) in Abhängigkeit von der Zeit, Wälzwinkel, und/oder Tauchweg (über einen Regler interaktiv verschiebbar) gezeigt sind.

Es wird hier vorzugweise eine Unterteilung der Schneiden in Längenabschnitte vorgenommen, wie anhand des Beispiels der Figuren 7A - 7C illustriert. Damit lässt sich durch das Auswerten der Datenmengen erkennen, in welchen Längenabschnitten einer Schneide die höchsten lokalen Kräfte momentan auftreten.

Statt ein Unterteilung in Längenabschnitte vorzunehmen, kann zusätzlich oder alternativ ein Unterteilung in Zeitsegmente vorgenommen werden.

Bei allen Ausführungsformen können die relativen Kräfte, die an den Schneiden auftreten, aus der jeweiligen Spandicke berechnet werden. Dabei kann man vereinfacht annehmen, dass das Erzeugen der größten Spandicke auch das Aufwenden der grössten Kräfte an der entsprechenden Schneide erfordert. Man geht also bei diesen Ausführungsformen vereinfacht von einer direkten Proportionalität zwischen Spandicke und relativen Kraft aus.

Bei allen Ausführungsformen kann aber stattdessen auch die Spanbildung (optionaler Schritt V3.1) und/oder die 3-dimensionale Geometrie der Späne (optionaler Schritt V3.2), statt nur der Spandicke genauer analysiert werden. Dabei kann man z.B. bei der Spanbildung verschiedene Spanbildungsarten, respektive am Span die verschiedenen Zonen betrachten. Es ist z.B. bekannt, dass sich an einem Schneidkeil vor der Hauptschneide im Übergangsbereich zwischen der Spanfläche 27 und der daran anschliessenden Freifläche (z.B. die Freifläche 28.a) eine Stau- und Trennzone ausbildet. Dort sind die auf die Schneide einwirkenden Kräfte am größten, d.h. dort hat auch die relative Kraft typischerweise ein Maximum. Es handelt sich hier um die Zone, in der der Werkstoff getrennt wird.

Zusätzlich zu der Stau- und Trennzone, kann man auch die Scherzone an der Spanfläche 27 betrachten. Dort sind die relativen Kräfte etwas geringer als im Bereich der Stau- und Trennzone.

Beim spanenden Bearbeiten eines Zahnrad-Werkstücks mit den Schneiden eines Werkzeugs, unterliegen diese Schneiden einem gewissen Verschleiß. Dabei sind verschiedenste Verschleissformen bekannt. Anhand von verschlissenen Werkzeugen können die Verschleissformen festgelegt werden, die sich in den verschiedenen Längenabschnitten der verschiedenen Schneiden typischerweise ausbilden. Falls z.B. die Kopfschneide einer anderen Verschleissform (z.B. Rissbildung) unterliegen sollte als z.B. die Aussen- und Innenschneiden (z.B. Schneidenverrundung durch Abrasion). So kann man speziell für die Kopfschneide andere Maximalwerte festlegen als z.B. für die Aussen- und Innenschneiden. Dieser Ansatz ermöglicht letztendlich eine Verbesserung der Standzeit des gesamten (Stab-)Messers.

### Bezugszeichen

| | |
|---|---|
| Zahnrad-Werkstück /Kegelrad/Kegelrad-Werkstück | 11 |
| Zahnlücke | 12 |
| Schneidwerkzeug / Messerkopf / Stabmesserkopf / Stirnmesserkopf | 20 |
| Innenschneide / Innenmesser | 21.i |
| Außenschneide / Aussenmesser | 21.a |
| Kopfschneide | 21.k |
| Grundkörper | 22 |
| Stabmesser | 23 |
| Schaft | 25 |
| aktiver Bereich | 26 |
| Spanfläche | 27 |
| Kopffreifläche | 28 |
| Freiflächen | 28.a, 28.i |
| Werkzeug / (Stab-)Messerkopf | 30 |
| Aussenmesser/Aussenschneiden | 33.a |
| Innenmesser/Innenschneiden | 33.i |
| fertig bearbeitete linke Flanke | 53f |
| vorverzahnte rechte Flanke | 54v |
| fertig bearbeitete rechte Flanke | 54f |
| Drehpunkt der Werkzeugspindel/Schnittpunkt | 102 |
| Lückengrund | 114 |
| | |
| Speicher | 150 |
| Software/Rechner | 151 |
| Zweig | 153 |
| Zweig | 152 |
| Pfeile (Teilungsdrehung) | a, b, c |
| Segmente | Δ1, Δ2, Δ3, ... Δn |
| Daten | {D} |
| Grundkreis | G |
| Angaben/Daten zur Definition des Maschine und/oder Kinematik | KG |
| Schneidkräfte | K.i, K.a, K.k, K.i(t), K.a(t), K.k(t) |
| Mittelpunkt | M |
| Anzahl der Segmente | n |
| Nennkreis | N |
| Rollkreis | R |
| relative Kraft | rK |
| erste Relativposition | RP1 |
| Schneidkraft | S, S(t) |
| Krafteinwirkung auf Schneiden | K.i, K.a |
| Zeit | t |
| Zeitpunkt | ta |
| Verfahrensschritte | V1, V2, V3, V3.1, V3.2, V4.1, V4.2, V4.3, V5, V6 |
| Drehbewegung des Werkzeugs | ω1 |
| Drehbewegung des Werkzeugs | ω2 |
| Drehbewegung (Erzeugerrad-Drehung) | ω3 |
| Angaben/Daten zur Definition des Verzahnungswerkzeugs | VG |
| Angaben/Daten zur Definition des Zahnrad-Werkstücks | WG |
| Flugkreisradius | Z1 |
| Koordinatenachse/Strecke | x |

## Patentansprüche

1. Verfahren zum spanerzeugenden Bearbeiten eines Zahnrad-Werkstücks (11) in einer Maschine mit einem Schneidwerkzeug (20) das mindestens zwei geometrisch bestimmte Schneiden (21.a, 21.i, 21.k) umfasst, die im Rahmen des spanerzeugenden Bearbeitens Material in Spanform am Zahnrad-Werkstück (11) erzeugen, wobei das spanerzeugende Bearbeiten durch Verfahrensparameter definiert ist, mit den Schritten:
(1) Durchführen einer computergestützten Analyse (V3) des Erzeugens von Spänen an den mehreren Schneiden (21.a, 21.i, 21.k) des Schneidwerkzeugs (20),
(2) Durchführen einer computergestützten Ermittlung von relativen Kräften, die beim Erzeugen von Spänen an den mehreren Schneiden (21.a, 21.i, 21.k) des Schneidwerkzeugs (20) auftreten werden,
(3) Optimieren des spanerzeugenden Bearbeitens, um zu verhindern, dass die relativen Kräfte einen vorgegebenen Grenzwert übersteigen oder einen Grenzbereich erreichen, wobei im Rahmen des Optimierens durch eine Anpassung mindestens eines der Verfahrensparameter angepasste Verfahrensparameter bereitgestellt werden, und
(4) Durchführen des spanerzeugenden Bearbeitens (V6) des Zahnrad-Werkstücks (11) mit dem/den angepassten Verfahrensparametern.

2. Verfahren nach Anspruch 1, **dadurch gekennzeichnet, dass** im Rahmen der Schritte (1) - (3) die zu erwartende Belastung an den mehreren Schneiden (21.a, 21.i, 21.k) des Schneidwerkzeugs (20) für einen Teil oder für alle (Zeit-)Abschnitte der spanenden Bearbeitung ermittelt werden.

3. Verfahren nach Anspruch 1 oder 2, **dadurch gekennzeichnet, dass** in einem Verfahrensschritt, der vor dem Schritt (1) oder als Teil des Schritts (1) durchgeführt wird, eine Segmentierung vorgenommen wird.

4. Verfahren nach Anspruch 3, **dadurch gekennzeichnet, dass** durch die Segmentierung eine Unterteilung in Zeitpunkte, Zeitabschnitte, oder in Längenabschnitte der Schneiden (21.a, 21.i, 21.k) erfolgt, wobei dann im Rahmen des Schritts (2) die relativen Kräfte für jedes dieser Segmente ermittelt wird.

5. Verfahren nach einem der Ansprüche 1 bis 4, **dadurch gekennzeichnet, dass** im Rahmen des Schritts (2) eine computergestützte Span-Analyse (V3) vorgenommen wird, die eine Ermittlung des Vorgangs der Span-Bildung (V3.1) und/oder eine Ermittlung der Span-Geometrie (V3.2) umfasst.

6. Verfahren nach einem der Ansprüche 1 bis 5, **dadurch gekennzeichnet, dass** im Rahmen des Schritts (2) eine computergestützte Span-Analyse (V3) vorgenommen wird, die auf einem oder mehreren der folgenden Ansätze beruht:
- mechanistisches Modell, das die Bildung von Scherebenen und/oder Scherzonen abbildet,
- Annahme eines linearen Zusammenhangs zwischen Spanungsdicke und entsprechender Kraft, die zum spanerzeugenden Bearbeiten erforderlich ist,
- Potential-Modell,
- Exponential-Modell.

7. Verfahren nach einem der Ansprüche 1 bis 5, **dadurch gekennzeichnet, dass** mindestens ein Grenzwert und/oder ein Grenzbereich vorgegeben sind/ist, oder dass ein Benutzer zur Eingabe mindestens eines Grenzwerts und/oder eines Grenzbereichs aufgefordert wird (V4.3).

8. Verfahren nach einem der Ansprüche 1 bis 7, **dadurch gekennzeichnet, dass** im Rahmen des Optimierens des spanerzeugenden Bearbeitens die folgenden Schritte durchgeführt werden:
(3a) Prüfen (V5), ob eine der relativen Kräfte den vorgegebenen Grenzwert übersteigt oder den Grenzbereich erreicht,
∘ Falls eine der relativen Kräften den vorgegebenen Grenzwert übersteigt oder den Grenzbereich erreicht, dann Vornehmen mindestens einer Änderung an dem geplanten spanerzeugenden Bearbeiten des Zahnrad-Werkstücks (11) durch die Anpassung des mindestens einen der Verfahrensparameter, um die eine der relativen Kräfte unterhalb des vorgegebenen Grenzwerts oder außerhalb des Grenzbereichs zu bringen,
∘ Wiederholen des Schritts (3a), solange die eine der relativen Kräfte den vorgegebenen Grenzwert übersteigt oder den Grenzbereich erreicht,
∘ Falls keine der relativen Kräften einen vorgegebenen Grenzwert übersteigt oder den Grenzbereich erreicht, dann Durchführen des Schritts (4).

9. Verfahren nach einem der Ansprüche 1 bis 7, **dadurch gekennzeichnet, dass** im Rahmen des Optimierens des spanerzeugenden Bearbeitens die folgenden Schritte durchgeführt werden:
(3b) Prüfen, ob eine der relativen Kräfte unterhalb des vorgegebenen Grenzwerts oder des Grenzbereichs liegt,
∘ Falls eine der relativen Kräfte unterhalb des vorgegebenen Grenzwerts oder außerhalb des Grenzbereichs liegt, dann Vornehmen mindestens einer Änderung an dem geplanten spanerzeugenden Bearbeiten des Zahnrad-Werkstücks (11) durch die Anpassung des mindestens einen der Verfahrensparameter, um die eine der relativen Kräfte näher an den vorgegebenen Grenzwert oder in den Grenzbereich zu bringen,
∘ Wiederholen des Schritts (3b), bis die eine der relativen Kräfte den vorgegebenen Grenzwert erreicht oder innerhalb des Grenzbereichs liegt,
∘ Falls die eine der relativen Kräfte den vorgegebenen Grenzwert erreicht oder innerhalb des Grenzbereichs liegt, dann Durchführen des Schritts (4).

10. Verfahren nach einem der Ansprüche 1 bis 9, **dadurch gekennzeichnet, dass** es sich bei dem Verfahren zum spanerzeugenden Bearbeiten um ein einzelteilendes Verfahren oder um ein kontinuierlich teilendes Verfahren handelt.

## Claims

1. Method for chip-generating machining of a gear workpiece (11) in a machine having a cutting tool (20) which comprises at least two geometrically defined cutting edges (21.a, 21.i, 21.k) which generate material in chip form on the gear workpiece (11) as part of the chip-generating machining, the chip-generating machining being defined by method parameters, comprising the steps of:
(1) performing a computerised analysis (V3) of the generation of chips on the plurality of cutting edges (21.a, 21.i, 21.k) of the cutting tool (20),
(2) performing a computerised determination of relative forces that will occur when generating chips on the multiple cutting edges (21.a, 21.i, 21.k) of the cutting tool (20),
(3) optimising the chip-generating machining to prevent the relative forces from exceeding a predetermined limit value or reaching a limit range, wherein adapted process parameters are provided as part of the optimising by adjusting at least one of the process parameters, and
(4) carrying out the chip-generating machining (V6) of the gear workpiece (11) with the adapted process parameter(s).

2. Method according to claim 1, **characterised in that**, in steps (1) - (3), the expected load on the plurality of cutting edges (21.a, 21.i, 21.k) of the cutting tool (20) is determined for a part or for all (time) sections of the machining operation.

3. Method according to claim 1 or 2, **characterised in that** a segmentation is carried out in a method step which is carried out before step (1) or as part of step (1).

4. Method according to claim 3, **characterised in that** the segmentation is used to divide the cutting edges (21.a, 21.i, 21.k) into time points, time sections or length sections, the relative forces for each of these segments then being determined as part of step (2).

5. Method according to one of claims 1 to 4, **characterised in that** a computer-aided chip analysis (V3) is carried out as part of step (2), which comprises a determination of the chip formation process (V3.1) and/or a determination of the chip geometry (V3.2).

6. Method according to one of claims 1 to 5, **characterised in that** a computer-aided chip analysis (V3) is carried out as part of step (2), which is based on one or more of the following approaches:
- mechanistic model that maps the formation of shear planes and/or shear zones,
- Assumption of a linear relationship between chip thickness and the corresponding force required for chip-forming machining,
- Potential model,
- exponential model.

7. Method according to one of claims 1 to 5, **characterised in that** at least one limit value and/or one limit range are/is predetermined, or **in that** a user is requested to enter at least one limit value and/or one limit range (V4.3).

8. Method according to one of claims 1 to 7, **characterised in that** the following steps are carried out as part of the optimisation of the chip-forming machining:
(3a) Checking (V5) whether one of the relative forces exceeds the predetermined limit value or reaches the limit range,
∘ If one of the relative forces exceeds the predetermined limit value or reaches the limit range, then making at least one change to the planned machining of the gear workpiece (11) by adjusting the at least one of the process parameters to bring the one of the relative forces below the predetermined limit value or outside the limit range,
∘ repeating step (3a) as long as one of the relative forces exceeds the predetermined limit value or reaches the limit range,
∘ If none of the relative forces exceeds a specified limit value or reaches the limit range, then carry out step (4).

9. Method according to one of claims 1 to 7, **characterised in that** the following steps are carried out as part of the optimisation of the chip-forming machining:
(3b) Checking whether one of the relative forces is below the predetermined limit value or the limit range,
∘ If one of the relative forces is below the predetermined limit value or outside the limit range, then making at least one change to the planned machining of the gear workpiece (11) by adjusting the at least one of the process parameters to bring the one of the relative forces closer to the predetermined limit value or into the limit range,
∘ repeating step (3b) until one of the relative forces reaches the predetermined limit value or is within the limit range,
∘ If one of the relative forces reaches the predetermined limit value or is within the limit range, then carrying out step (4).

10. Method according to one of claims 1 to 9, **characterised in that** the method for chip-forming machining is an individually dividing method or a continuously dividing method.

## Revendications

1. Procédé d'usinage par enlèvement de copeaux d'une pièce à usiner de roue dentée (11) dans une machine avec un outil de coupe (20) qui comprend au moins deux tranchants (21.a, 21.i, 21.k) déterminés géométriquement qui, dans le cadre de l'usinage par enlèvement de copeaux, produisent du matériau sous forme de copeaux sur la pièce à usiner de roue dentée (11), l'usinage par enlèvement de copeaux étant défini par des paramètres de procédé, comprenant les étapes suivantes :
(1) effectuer une analyse assistée par ordinateur (V3) de la production de copeaux sur la pluralité d'arêtes de coupe (21.a, 21.i, 21.k) de l'outil de coupe (20),
(2) effectuer une détermination assistée par ordinateur des forces relatives qui se produiront lors de la génération de copeaux sur les multiples arêtes de coupe (21.a, 21.i, 21.k) de l'outil de coupe (20),
(3) optimiser l'usinage par enlèvement de copeaux afin d'éviter que les forces relatives ne dépassent une valeur limite prédéterminée ou n'atteignent une plage limite, des paramètres de procédé adaptés étant fournis dans le cadre de l'optimisation par une adaptation d'au moins un des paramètres de procédé, et
(4) réalisation de l'usinage par enlèvement de copeaux (V6) de la pièce à usiner de roue dentée (11) avec le ou les paramètres de procédé adaptés.

2. Procédé selon la revendication 1, **caractérisé en ce que**, dans le cadre des étapes (1) - (3), la charge attendue sur les multiples arêtes de coupe (21.a, 21.i, 21.k) de l'outil de coupe (20) est déterminée pour une partie ou pour toutes les sections (de temps) de l'usinage par enlèvement de copeaux.

3. Procédé selon la revendication 1 ou 2, **caractérisé en ce qu'**une segmentation est effectuée dans une étape du procédé qui est réalisée avant l'étape (1) ou en tant que partie de l'étape (1).

4. Procédé selon la revendication 3, **caractérisé en ce que**, par la segmentation, on effectue une subdivision en moments, en sections de temps, ou en sections de longueur des arêtes de coupe (21.a, 21.i, 21.k), les forces relatives étant alors déterminées pour chacun de ces segments dans le cadre de l'étape (2).

5. Procédé selon l'une des revendications 1 à 4, **caractérisé en ce que**, dans le cadre de l'étape (2), on procède à une analyse de copeaux assistée par ordinateur (V3), qui comprend une détermination du processus de formation de copeaux (V3.1) et/ou une détermination de la géométrie de copeaux (V3.2).

6. Procédé selon l'une des revendications 1 à 5, **caractérisé en ce que**, dans le cadre de l'étape (2), on procède à une analyse de copeaux assistée par ordinateur (V3), basée sur une ou plusieurs des approches suivantes :
- modèle mécaniste reproduisant la formation de plans de cisaillement et/ou de zones de cisaillement,
- hypothèse d'une relation linéaire entre l'épaisseur du copeau et la force correspondante nécessaire à l'usinage par enlèvement de copeaux,
- modèle de potentiel,
- modèle exponentiel.

7. Procédé selon l'une des revendications 1 à 5, **caractérisé en ce qu'**au moins une valeur limite et/ou une plage limite sont/est prédéfinies, ou **en ce qu'**un utilisateur est invité à entrer au moins une valeur limite et/ou une plage limite (V4.3).

8. Procédé selon l'une des revendications 1 à 7, **caractérisé en ce que**, dans le cadre de l'optimisation de l'usinage par enlèvement de copeaux, les étapes suivantes sont exécutées :
(3a) vérifier (V5) si l'une des forces relatives dépasse la limite prédéfinie dépasse la valeur limite ou atteint la zone limite,
∘ Si l'une des forces relatives dépasse la valeur limite prédéterminée ou atteint la zone limite, alors effectuer au moins une modification de l'usinage planifié de la pièce à usiner (11) en ajustant au moins l'un des paramètres du procédé pour amener l'une des forces relatives en dessous de la valeur limite prédéterminée ou en dehors de la zone limite,
∘ répéter l'étape (3a) tant que l'une des forces relatives dépasse la valeur limite prédéterminée ou atteint la zone limite,
∘ Si aucune des forces relatives ne dépasse une valeur limite prédéterminée ou n'atteint la zone limite, exécuter l'étape (4).

9. Procédé selon l'une des revendications 1 à 7, **caractérisé en ce que**, dans le cadre de l'optimisation de l'usinage par enlèvement de copeaux, on effectue les étapes suivantes :
(3b) Vérifier si l'une des forces relatives est inférieure à la limite prédéterminée. valeur limite ou de la plage limite,
∘ Si l'une des forces relatives est inférieure à la valeur limite prédéterminée ou en dehors de la plage limite, alors apporter au moins une modification à l'usinage planifié de la pièce à usiner (11) en ajustant au moins l'un des paramètres du procédé afin de rapprocher l'une des forces relatives de la valeur limite prédéterminée ou de la plage limite,
∘ répéter l'étape (3b) jusqu'à ce que l'une des forces relatives atteigne la valeur limite prédéterminée ou se trouve dans la plage limite,
∘ si l'une des forces relatives atteint la valeur limite prédéterminée ou se situe dans la plage limite, alors effectuer l'étape (4).

10. Procédé selon l'une quelconque des revendications 1 à 9, **caractérisé en ce que** le procédé d'usinage par enlèvement de copeaux est un procédé à division unique ou un procédé à division continue.
